# EUROPÄISCHE PATENTSCHRIFT

(11) **EP 1 355 182 B1**
(45) Veröffentlichungstag und Bekanntmachung des Hinweises auf die Patenterteilung: **27.06.2007**
(21) Anmeldenummer: 03003797.2
(22) Anmeldetag: 20.02.2003
(51) Int. Cl.: G02B 21/06, G02B 21/00, G02B 5/20

(54) **Mikroskop mit einem Identifikationssystem für optische Filter**
Microscope with an optical filter identification unit
Microscope avec un ensemble pour l' identification de filtres optiques

(30) Priorität: 17.04.2002 DE 10217545
(43) Veröffentlichungstag der Anmeldung: 22.10.2003
(73) Patentinhaber: CARL ZEISS JENA GmbH, 07745 Jena (DE)
(72) Erfinder: Möhler, Gunter, 07745 Jena (DE); Wolleschensky, Ralf, 07743 Jena (DE); Liedtke, Mirko, 07745 Jena (DE)
(74) Vertreter: Hampe, Holger

(56) Entgegenhaltungen:
- EP-A- 0 638 788
- WO-A-00/19262
- US-A- 5 926 773
- US-A- 6 167 173
- US-A1- 2001 038 452

## Beschreibung

Bei Filterrevolvern, Schiebern und ähnlichen Elementen eines Mikroskops wird üblicherweise ein Positionssensor zur Erfassung einer Null-Position als Referenz verwendet, von der aus alle weiteren Positionen errechnet und angefahren werden. Die Kennung der eingesetzten Filter wird über Tabellen oder Codes dem Anwender angezeigt. Eine wirkliche Messung und Erkennung im bestückten Zustand kann nur über entsprechend einheitlich gekennzeichnete Filter (z.B. Barcodes, binär codierte Magnetanordnungen u.ä.) erfolgen. Da aber die Filter von unterschiedlichen Herstellern bezogen werden, ist auch die Kennzeichnung unterschiedlich und nicht mit einem Verfahren lesbar.

Weiterhin ist eine Fehlbestückung nie hundertprozentig auszuschließen und eine nachträgliche Bestückungen erfordert eine manuelle Korrektur der Datenbank oder Wertetabelle.

Die Patentanmeldung US 2001/0038452 beschreibt ein Messgerät zur Kalibrierung von Paaren optischer Filter mit örtlich variablen spektralen Eigenschaften (Parametric color filter) zueinander, um die spektrale Wirkung bei unterschiedlicher Winkelstellung der Filter zueinander abspeichern zu können.

Aus der US 5,926,773 ist ein Algorithmus bekannt, durch Beleuchtung einer Probe und spektraler Detektion des zurückgestrahlten Lichts spektrale Charakteristika der Probe zu identifizieren und mit Hilfe dieser die Probe einer Materialzusammensetzung mit bekannter Charakteristik zuzuordnen.

### Beschreibung der Erfindung:

Als Positionssensor wird ein spektraler Sensor und eine weiße LED benutzt.

Dieser Sensor ist in der Lage die optimale Stelle (maximaler Durchlaß) einer Position zu ermitteln als auch durch spektrale Messung die Charakteristik eines Filters zu bestimmen. Durch Abgleich mit einer Datenbank ist eine zuverlässige Bestimmung des eingesetzten Filters möglich. Weiterhin kann eine Verkippung des Filters im Strahlengang überwacht werden.

Darüber hinaus ist es möglich, beim Einsatz des Farbsensors anstatt einer Monitordiode, den aktiven Laser, die Laserwellenlänge und die emittierte Leistung zu bestimmen und diese Werte mit vorhandenen Anregungs/Detektionsfilterkombinationen zu verknüpfen.

Die Erfindung wird nachstehend anhand der schematischen Zeichnungen näher erläutert.

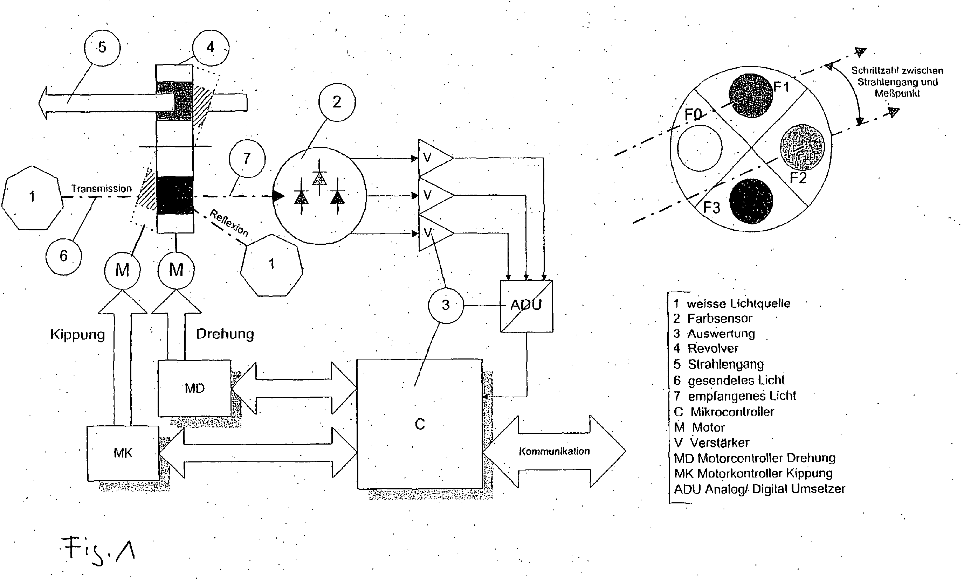

Fig.1 zeigt den prinzipiellen Aufbau für die optische Bauteilerkennung und Positionierung.

Hier sowie in Fig.1b ist schematisch dargestellt, wie ein Revolver 4, der beispielsweise Farbfilter oder mehrere dichroitische Teiler enthält, vom Mikroskopstrahlengang 5 (Beleuchtungs- oder Detektionsstrahlengang) durchsetzt wird.

Derartige Revolver sind mit dem Einsatz unterschiedlicher Lichtquellen , insbesondere in Fluoreszenzmikroskopen, bekannte DE 19702753A1 , DE 19829944 A1), wobei auch mehrere Revolver mit unterschiedlichen Filtern oder Strahlteilern von Hand oder automatisch ausgetauscht werden können.

Weiterhin ist ein zweiter Strahlengang 6 (Sendeteil) /7 (Empfangsteil) außerhalb des Mikroskopstrahlenganges vorgesehen, der von einer ortsfesten Weißlichtquelle 1 (Diode) erzeugt wird und in Fig.1b links so angeordnet ist, daß die Filter oder Strahlteiler von ihm bei Drehung des Revolvers in Transmission durchsetzt werden.

In Fig. 1b ist auf der rechten Seite die Bestrahlung von dichroitischen Strahlteilern und die Messung der Charakteristik des reflektierten Lichtes dargestellt.

Auf der der Lichtquelle 1 gegenüberliegenden Seite des Revolvers 4 ist erfindungsgemäß ein ortsfester Farbsensor 2 zur spektralen Analyse des transmittierten Lichtes vorgesehen.

Dieser Sensor 2 ist auf einer Leiterplatte 3 befestigt und über einen Verstärker V und einen A/D Wandler ADU mit einer Steuer- und Recheneinheit C verbunden, die auch mit Steuerungselementen MD zur Drehung des Revolvers und , auch optional, mit Steuerelementen MK zur leichten Verkippung des Revolvers in einem leicht von der Senkrechten abweichenden Winkel zur optischen Achse des Mikroskopes verbunden ist.

Vorteilhaft kann der Sensor 2 ein einfacher und kleiner "3 Element" Farbsensor (Firma Mazet www.mazet.de)) sein, der aus drei auf einem Chip integrierten Fotodioden besteht, die mittels Farbfilter für jeweils einen anderen Farbbereich, vorzugsweise für die Grundfarben Rot, Grün, Blau sensibilisiert sind.

Die wellenlängenabhängige Empfindlichkeit eines solchen Sensors ist in Fig.1a dargestellt. Aber auch andere Farbsensoren wie auch der miniaturisierte Spektralsensor von Zeiss (www.zeiss.de)sind hierfür prinzipiell geeignet.

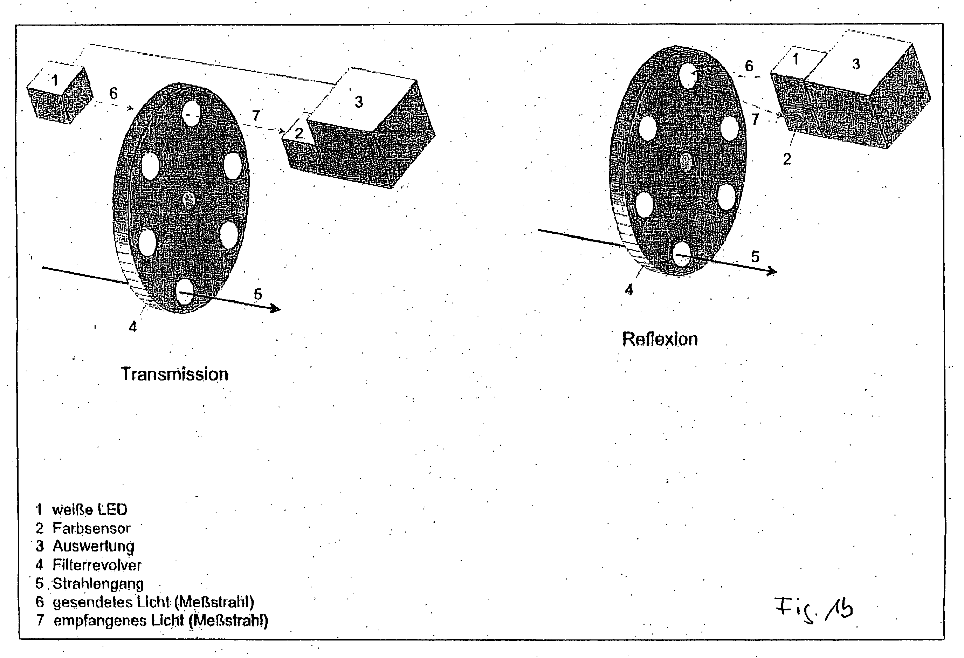

In Fig. 2 ist die spektrale Verteilung einer Weißlicht-LED dargestellt.

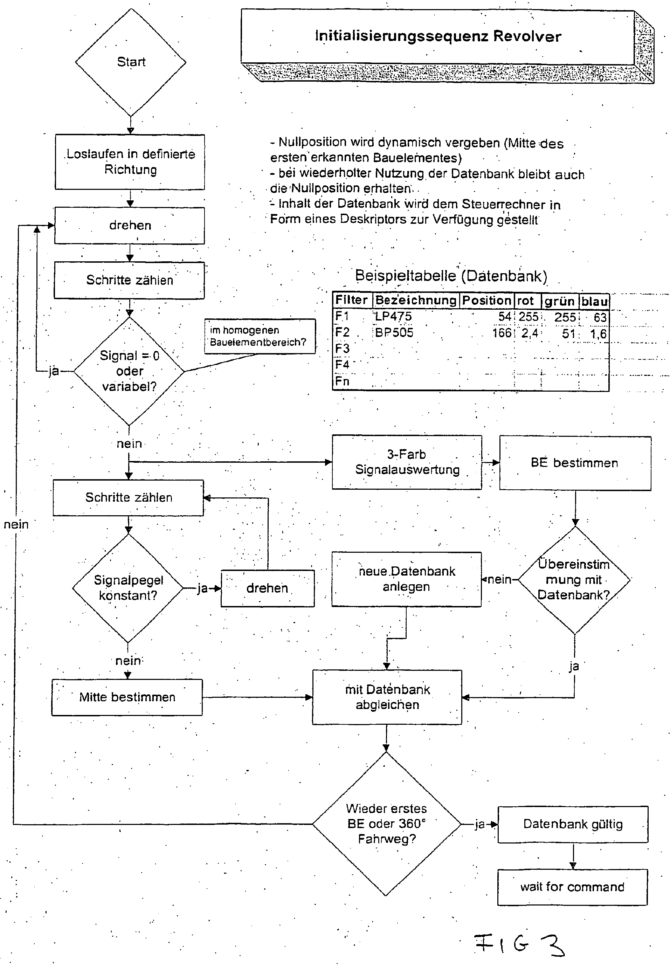

In Fig.3 ist ein möglicher vorteilhafter logischer Ablauf bei der Bestimmung der Filterart und Position dargestellt.

Nach einem Startsignal beginnt das Drehen des Revolvers 4 , wobei der Drehantrieb über Schrittmotore erfolgt, deren Schritte gezählt werden, oder durch einen DC Motor mit inkrementalem Geber, so daß eine eindeutige Zuordnung zu einer Revolverposition in der Steuereinheit S vorliegt.

Als Nullposition kann beispielsweise die (geometrische) Mitte des ersten erkannten Bauelementes (Filters) festgelegt werden.

Der gesamte Vorgang der Erkennung einer Filter- oder Strahlteilerbestückung kann dabei im Sekundenbereich, also sehr schnell, erfolgen und abgeschlossen sein (Schritte im ms Bereich durch Schrittmotoren möglich).

Sobald das Signal des Farbsensors 2 signifikant von Null abweicht, d.h. eine Durchgangsposition für das Licht 1 im Revolver 4 erreicht ist, erfolgt eine Farbauswertung im Farbsensor und eine Bestimmung der spektral abhängigen Intensität.

Diese wird nach A/D Wandlung im Rechner anhand in einer Datenbank vorgespeicherter Tabellen mit Farbwerten, die denen im Mikroskop verwendeter Filter entsprechen, verglichen und bei Übereinstimmung wird der jeweiligen Revolverposition eine Filterbezeichnung im Speicher zugeordnet.

Falls keine Übereinstimmung mit den Werten der Datenbank gefunden wird, wird eine neue Datenbank angelegt bzw. der vorhandenen Datenbank ein Filtertyp " X" zugeordnet, der dann dem Benutzer angezeigt werden und einen benutzerspezifischen Namen erhalten kann. Das ist von großem Vorteil, weil der Mikroskopnutzer auf diese Weise Fiter und Filterräder anderer Hersteller problemlos und reversibel einsetzen kann, weil sich das System die Filterposition und den zugeordneten Filternamen über die Datenbank merken kann.

Während diese Filtertypbestimmung im Rechner stattfindet, kann gleichzeitig durch inkrementales Weiterdrehen auch noch über die Auswertung der jeweiligen Farbintensität und beispielsweise eine Schwerpunktbildung oder Addition der Ort der optimalen Transmission auf dem jeweiligen Filter ermittelt und abgespeichert werden, so daß bei Verwendung dieses Filters immer auch gleichzeitig die optimale Position eingestellt werden kann.

Diese Ermittlung kann aber auch bei jedem Einlegen des Filterrevolvers aktualisiert werden , so daß mögliche Kratzer oder Alterungsvorgänge auf der bisherigen optimalen Position durch das Auffinden einer neuen optimalen Position keinen negativen Einfluß mehr ausüben.

Weiterhin kann durch eine leichte Verkippung des Revolvers gegen die optische Achse eine Veränderung (und Optimierung) der Transmissionscharakteristik an einem bestimmten Filterort, z.B. bei der vorher ermittelten optimalen Position erfolgen und abgespeichert werden, zusammen mit der Schrittmotorposition der Verkippungssteuerung.

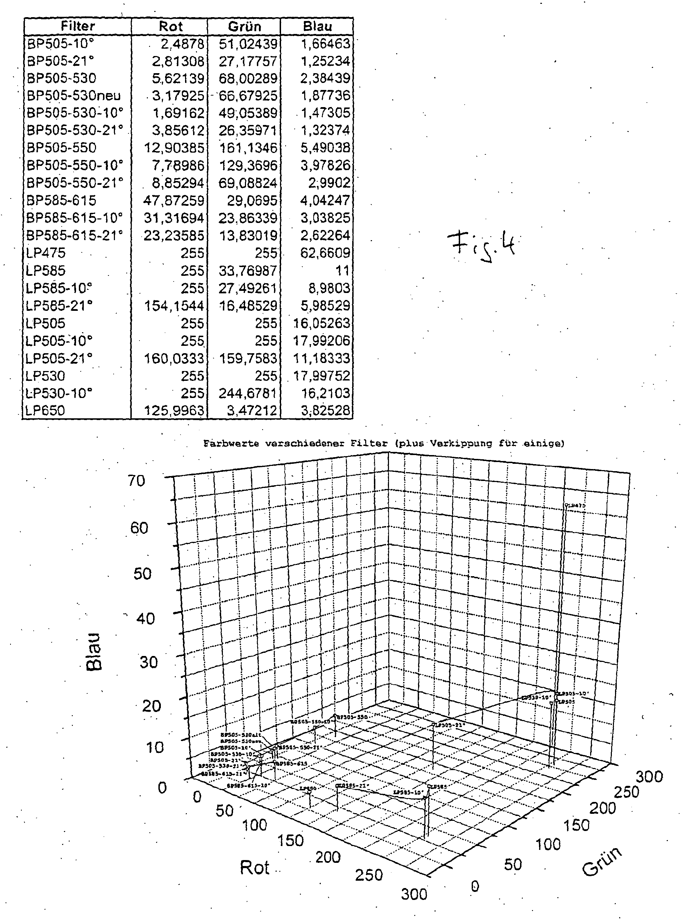

Fig.4: Gemittelte Meßwerte für typische Filter und verschiedene Verkippungen sowie graphische 3D Darstellung

Hier ist in Tabellenform und anhand eines Histogrammes dargestellt, daß sich unterschiedliche Filtertypen bezüglich ihrer spektralen Charakteristik derart unterscheiden, daß bereits mit einem einfachen Dreifarbsensor eine eindeutige Zuordnung der Meßwerte zum Bauelementtyp erfolgen kann.

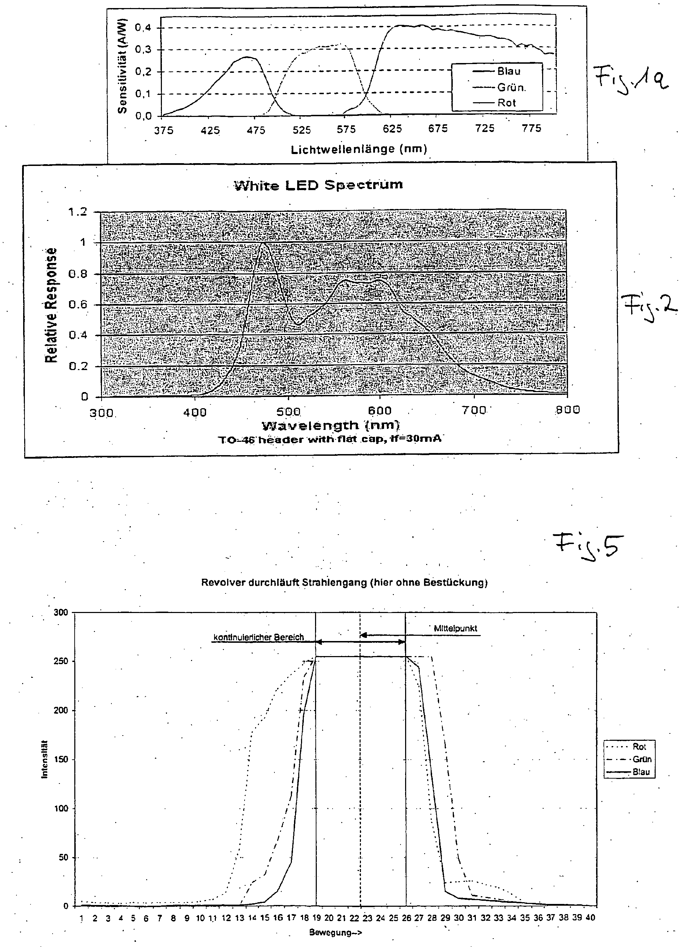

Fig.5: Intensitätsverlauf bei Durchlaufen eines Revolvers (hier: ohne Bestückung) Hier ist erkennbar, daß sich der Beginn und das Ende eines Fiterdurchlasses (hier ohne Bestückung) gut identifizieren läßt (Kontinuierlicher Bereich).

Auf der Abszisse sind hier beispielhaft die gezählten Schritte des Schrittmotors dargestellt.

Eine andere Anwendung des Spektralsensors ist die Erfassung des Lichtes der Beleuchtungslichtquelle. Dazu zeigt

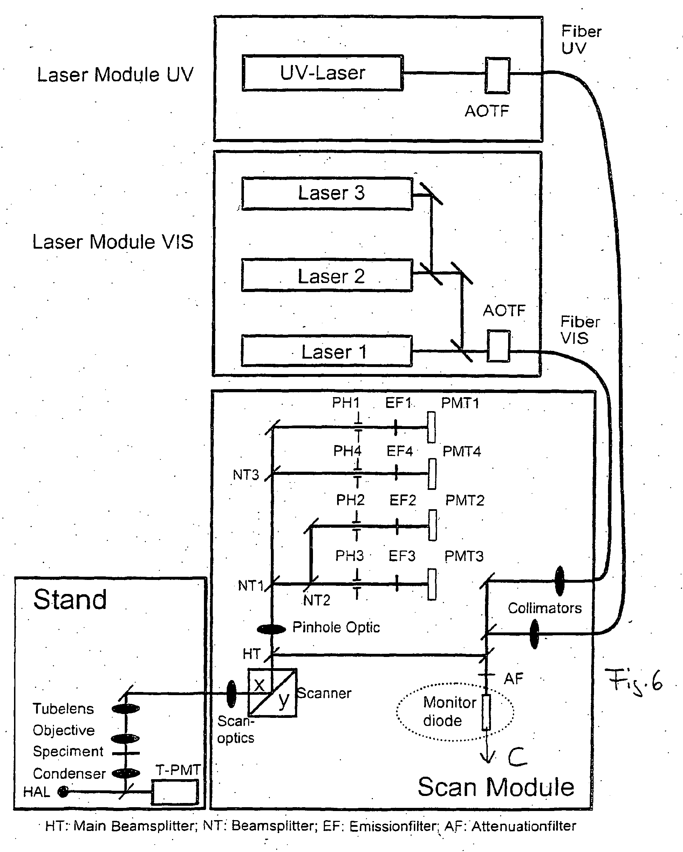

Fig.6: den Prinzipieller Aufbau einer Laserüberwachung (Monitordiode)

Zur Beschreibung wird hier (unter anderem) auf DE 19702753 , US 6167173 verwiesen.

Monitiordioden zur Laserüberwachung in einem LSM sind daraus bekannt.

Neu ist jedoch die Erfassung der eingestrahlten Laserstrahlung mit einem Farbsensor, der die verwendete Wellenlänge (neben der Intensität) erkennt. Hierbei kann bei Einstrahlung eines neuen Lasers in das System eine zu der eingestrahlten Wellenlänge passende Anregungs / Detektions/Filterkombination eingestellt werden.

Die Erfindung ist in unterschiedlichen Mikroskoptypen vorteilhaft anwendbar, insbesondere bei Forschungsmikroskopen wie z.B. Fluoreszenzmikroskopen, bei Laser Scanning Mikroskopen (LSM), insbesondere zur Fluoreszenzuntersuchung, bei FCS (Fluoreszenz Korreletions Spektroskopie) Anordnungen, FCS/LSM Kombinationen und bei der Ermittlung spektraler Signaturen gemäß dem ZEISS Meta System.

Folgende besondere Vorteile der Erfindung sind besonders hervorzuheben:
- vollautomatische Typbestimmung der Bestückung von beweglichen optischen Elementen (in z.B. Filter-, Reflektor-, Strahlteiler-, Objektiv- u.ä. Revolvern, Schiebern etc.) durch spektrale Charakterisierung
- optimale Positionierung mindestens eines optischen Elementes im Strahlengang
- Anordnung von Lichtquelle und Sensor nicht (störend) im Strahlengang des Mikroskops
- Aufnahme des Signals mittels 3 Farbsensor und weißer Lichtquelle , Auswertung und Tabellenverwaltung mittels ADU und Mikrocontroler
- keine mechanische oder binär codierte (oder welche Art auch immer) Rast notwendig
- keine Codierung der optischen Bauelemente nötig
- Fehlbestückungen der Bauelementeträger (Revolver, Schieber etc.) nicht mehr möglich
- Manueller Datenbankabgleich nach Bauelementewechsel nicht mehr nötig
- Automatischer Setup möglich
- Einsatz verschiedenster optischer Bauelemente problemlos möglich
- Einsatz verschiedenster Revolver (Träger/Positionsanzahl) problemlos möglich
- Dynamische Positionierung der Bauelemente möglich, d.h. keine absoluten Positionen nötig
- Auswahl der Bauelemente mit Typbezeichnung möglich
- Selbstkalibrierung des Revolvers unabhängig vom System möglich
- Kontinuierliche Kalibrierungsüberwachung beim laufenden Betrieb möglich
- Vereinfachte, schnellere Produktion/ Montage
- Fehlertolerante Produktion/ Montage
- Detektion von Verunreinigungen des Bauelementes
- Detektion von thermischen Toleranzen/ Veränderungen des Bauelementes
- Detektion von Inhomogenitäten des Bauelementes (spez. Filter)
- Detektion von Fertigungsschwankungen des Bauelementes
- Präzise Variation der Filtereigenschaften durch Neigung der Filterachse
- Überwachung der Filtereigenschaften bei Neigung der Filterachse

Bei Einsatz des 3-farb Sensors im Strahlengang als Monitordiode:
- Überwachung/ Überprüfung/ Sensor zur Einstellung der Anregungswellenlängen
- Überwachung der Laserleistung
- Detektion von Mischlicht/ Störquellen
- Abgleich der optischen Eigenschaften des Mikroskops
- Überwachung der optischen Eigenschaften des Mikroskops

## Patentansprüche

1. Mikroskop mit einer Beleuchtungslichtquelle zum Beleuchten einer Probe und im Beleuchtungs- und/oder Beobachtungs- und/oder Detektionsstrahlengang (5) angeordneten oder anordenbaren optischen Bauelementen (F0, F1, F2, F3) des Mikroskops zur unterschiedlichen spektralen Beeinflussung mindestens eines der genannten Strahlengänge (5), wobei die optischen Bauelemente (F0, F1, F2, F3) von einem Bauelementeträger (4) gehalten werden,
**gekennzeichnet dadurch, dass**
das Mikroskop außerhalb dieser Strahlengänge (5) eine Anordnung aus einer mehrere Wellenlängen emittierenden Lichtquelle (1) und mindestens einen das Licht dieser Lichtquelle (1) empfangenden Spektralsensor (2) aufweist, dass eines der optischen Bauelemente (F0, F1, F2, F3) mittels des Bauelementeträgers (4) in einen optischen Weg (6, 7) zwischen Lichtquelle (1) und Spektralsensor(2) einbringbar ist und
dass der Spektralsensor (2) das Licht der Lichtquelle (1) nach Wechselwirkung mit dem eingebrachten optischen Bauelement (F0, F1, F2, F3) erfasst und spektral analysiert.

2. Mikroskop nach Anspruch 1, wobei die Wechselwirkung erfolgt durch Transmission des Lichtes durch eines der optischen Bauelemente (F0, F1, F2, F3).

3. Mikroskop nach Anspruch 1, wobei die Wechselwirkung erfolgt durch Reflektion des Lichtes an einem der optischen Bauelemente (F0, F1, F2, F3).

4. Mikroskop nach einem der vorangehenden Ansprüche, wobei die optischen Bauelemente (F0, F1, F2, F3) optische Filter sind.

5. Mikroskop nach Anspruch 4, wobei die Filter in einem verstellbaren Filterrevolver (4) angeordnet sind.

6. Mikroskop nach Anspruch 5, wobei der Filterrevolver (4) auswechselbar ist.

7. Mikroskop nach einem der Ansprüche 1 bis 3, wobei die optischen Bauelemente dichroitische Teiler sind.

8. Mikroskop nach Anspruch 7, wobei mindestens ein Teiler in einem Wechsler angeordnet ist.

9. Mikroskop nach Anspruch 8, wobei der Wechsler auswechselbar ist.

10. Mikroskop nach einem der vorangehenden Ansprüche, wobei das Mikroskop eine Laser Scanning Mikroskop und/oder eine Fluoreszenz-Correlations-Spektroskopie Anordnung beinhaltet.

11. Verfahren zur Steuerung eines Mikroskops nach Anspruch 1, wobei mittels eines Spektralsensors (2) und einer Lichtquelle (1) eine Wechselwirkung eines von der Lichtquelle (1) ausgehenden Meßstrahls (6) mit einem der optischen Bauelemente (F0, F1, F2, F3) erfasst, spektral analysiert und abgespeichert wird.

12. Verfahren nach Anspruch 11, wobei die Wechselwirkung erfolgt durch Transmission des Lichtes durch eines der optischen Bauelemente (F0, F1, F2, F3).

13. Verfahren nach Anspruch 12 wobei die optischen Bauelemente (F0, F1, F2, F3) optische Filter sind.

14. Verfahren nach Anspruch 13, wobei die Filter in einem Filterrevolver (4) angeordnet sind.

15. Verfahren nach Anspruch 14, wobei der Filterrevolver (4) auswechselbar ist.

16. Verfahren nach Anspruch 11, wobei die Wechselwirkung durch Reflektion des Lichtes an einem der optischen Bauelemente (F0, F1, F2, F3) erfolgt.

17. Verfahren nach Anspruch 11, wobei die optischen Bauelemente (F0, F1, F2, F3) dichroitische Teiler sind.

18. Verfahren nach Anspruch 17, wobei die Teiler in einem Wechsler angeordnet sind.

19. Verfahren nach Anspruch 18, wobei der Wechsler auswechselbar ist.

20. Verfahren nach einem der Ansprüche 11 bis 19, wobei die erfaßten Werte des Spektralsensors (2) mit vorgespeicherten Werten verglichen werden und eine Zuordnung zu vorgespeicherten Werten in einen Speicher erfolgt.

21. Verfahren nach einem der Ansprüche 11 bis 20, wobei die Zuordnung zusammen mit einem Positionssignal eines Bauelementewechslers (4) erfolgt.

22. Verfahren nach einem der Ansprüche 11 bis 21, wobei die erfaßten Werte, wenn keine Zuordnung zu vorgespeicherten Werten erfolgt, in einer Datenbank zusammen mit einem Positionssignal eines Bauelementewechslers abgespeichert werden.

23. Verfahren nach einem der Ansprüche 11 bis 22, wobei mittels des Spektralsensors (2) auf einem optischen Bauelement (F0, F1, F2, F3) der Ort maximaler und/ oder optimaler Transmission oder Reflektion ermittelt und mit einer Ortsposition abgespeichert wird.

## Claims

1. Microscope having an illuminating light source for illuminating a sample and optical components (FO, F1, F2, F3) of the microscope which are disposed or can be disposed in the illuminating and/or observing and/or detection beam path (5) for different spectral influencing of at least one of the said beam paths (5),
wherein the optical components (F0, F1, F2, F3) are held by a component element carrier (4),
**characterised in that** the microscope comprises outside these beam paths (5) an arrangement of a light source (1), which emits several wavelengths, and at least one spectral sensor (2) which receives the light of this light source (1),
that one of the optical components (FO, F 1, F2, F3) can be introduced by means of the component carrier (4) into an optical path (6, 7) between the light source (1) and the spectral sensor (2) and
that the spectral sensor (2) detects and spectrally analyses the light of the light source (1) after interaction with the introduced optical component (F0, F1, F2, F3)

2. Microscope as claimed in claim 1, wherein the interaction is performed by transmitting the light through one of the optical components (F0, F 1, F2, F3).

3. Microscope as claimed in claim 1, wherein the interaction is performed by reflecting the light at one of the optical components (F0, F1, F2, F3).

4. Microscope as claimed in any one of the preceding claims, wherein the optical components (F0, F1, F2, F3) are optical filters.

5. Microscope as claimed in claim 4, wherein the filters are disposed in an adjustable filter revolver (4).

6. Microscope as claimed in claim 5, wherein the filter revolver (4) is replaceable.

7. Microscope as claimed in any one of claims 1 to 3, wherein the optical components are dichroic splitters.

8. Microscope as claimed in claim 7, wherein at least one splitter is disposed in a changer.

9. Microscope as claimed in claim 8, wherein the changer is replaceable.

10. Microscope according to any one of the preceding claims, wherein the microscope comprises a laser scanning microscope and/or a fluorescence correlation spectroscopy arrangement.

11. Method for controlling a microscope as claimed in claim 1, wherein by means of a spectral sensor (2) and a light source (1) an interaction of a measuring beam (6) emanating from the light source (1) with one of the optical components (F0, F1, F2, F3) is detected, spectrally analyzed and stored.

12. Method as claimed in claim 11, wherein the interaction is performed by transmitting light through one of the optical components (F0, F1, F2, F3).

13. Method as claimed in claim 12, wherein the optical components (F0, F1, F2, F3) are optical filters.

14. Method as claimed in claim 13, wherein the filters are disposed in a filter revolver (4).

15. Method as claimed in claim 14, wherein the filter revolver (4) is replaceable.

16. Method as claimed in claim 11, wherein the interaction is performed by reflecting the light at one of the optical components (F0, F1, F2, F3).

17. Method as claimed in claim 11, wherein the optical components (F0, F1, F2, F3) are dichroic splitters.

18. Method as claimed in claim 17, wherein the splitters are disposed in a changer.

19. Method as claimed in claim 18, wherein the changer is replaceable.

20. Method as claimed in any one of claims 11 to 19, wherein the detected values of the spectral sensor (2) are compared with previously stored values and allocated to the previously stored values in a memory.

21. Method as claimed in any one of claims 11 to 20, wherein the allocation is performed together with a position signal of a component changer (4).

22. Method as claimed in any one of claims 11 to 21, wherein, if no allocation to the previously stored values occurs, the detected values are stored in a database together with a position signal of a component changer.

23. Method as claimed in any one of claims 11 to 22, wherein by means of the spectral sensor (2) on an optical component (F0, F1, F2, F3) the location of maximum and/or optimal transmission or reflection is determined and stored with a location position.

## Revendications

1. Microscope comprenant une source lumineuse d'éclairage pour l'éclairage d'un échantillon et de composants (F0, F1, F2, F3) optiques, disposés et pouvant être disposés dans la trajectoire du faisceau d'éclairage et/ou d'observation et/ou de détection (5), du microscope pour l'influence spectrale différente d'au moins une des trajectoires de faisceau (5) citées, les composants (F0, F1, F2, F3) optiques étant maintenus par un support de composant (4),
**caractérisé en ce que**
le microscope présente à l'extérieur de ces trajectoires de faisceau (5) un agencement constitué d'une source lumineuse (1) émettant plusieurs longueurs d'onde et au moins un capteur spectral (2) recevant la lumière de cette source lumineuse (1), **en ce que** l'un des composants (F0, F1, F2, F3) optiques peut être amené au moyen du support de composants (4) dans un trajet (6, 7) optique entre la source lumineuse (1) et le capteur spectral (2) et **en ce que** le capteur spectral (2) détecte la lumière de la source lumineuse (1) après une interaction avec le composant (F0, F1, F2, F3) optique introduit et l'analyse au plan spectral.

2. Microscope selon la revendication 1, l'interaction s'effectuant par transmission de la lumière à travers l'un des composants (F0, F1, F2, F3) optiques.

3. Microscope selon la revendication 1, l'interaction s'effectuant par réflexion de la lumière sur l'un des composants (F0, F1, F2, F3) optiques.

4. Microscope selon l'une quelconque des revendications précédentes, les composants (F0, F1, F2, F3) optiques étant des filtres optiques.

5. Microscope selon la revendication 4, les filtres étant disposés dans un revolver de filtres (4) réglable.

6. Microscope selon la revendication 5, le filtre de revolver (4) étant amovible.

7. Microscope selon l'une quelconque des revendications 1 à 3, les composants optiques étant des diviseurs dichroïtiques.

8. Microscope selon la revendication 7, au moins un diviseur étant disposé dans un changeur.

9. Microscope selon la revendication 8, le changeur étant amovible.

10. Microscope selon l'une quelconque des revendications précédentes, le microscope contenant un microscope de balayage laser et/ou un dispositif de spectroscopie de corrélation à fluorescence.

11. Procédé pour commander un microscope selon la revendication 1, une interaction d'un faisceau de lumière (6) partant de la source lumineuse (1) avec l'un des composants (F0, F1, F2, F3) optiques étant détectée au moyen d'un capteur spectral (2) et d'une source lumineuse (1), analysée au plan spectral et mémorisée.

12. Procédé selon la revendication 11, l'interaction s'effectuant par la transmission de la lumière par l'un des composants optiques (F0, F1, F2, F3).

13. Procédé selon la revendication 12, les composants (F0, F1, F2, F3) optiques étant des filtres optiques.

14. Procédé selon la revendication 13, les filtres étant disposés dans un revolver de filtres (4).

15. Procédé selon la revendication 14, le revolver de filtres (4) étant amovible.

16. Procédé selon la revendication 11, l'interaction s'effectuant par réflexion de la lumière sur l'un des composants (F0, F1, F2, F3) optiques.

17. Procédé selon la revendication 11, les composants (F0, F1, F2, F3) optiques étant des diviseurs dichroïtiques.

18. Procédé selon la revendication 17, les diviseurs étant disposés dans un changeur.

19. Procédé selon la revendication 18, le changeur étant amovible.

20. Procédé selon l'une quelconque des revendications 11 à 19, les valeurs enregistrées du capteur spectral (2) étant comparées avec des valeurs pré-mémorisées et une attribution à des valeurs pré-mémorisées s'effectuant dans une mémoire.

21. Procédé selon l'une quelconque des revendications 11 à 20, l'attribution s'effectuant en même temps qu'un signal de position d'un changeur de composant (4).

22. Procédé selon l'une quelconque des revendications 11 à 21, les valeurs enregistrées étant stockées dans une banque de données en même temps qu'un signal de position d'un changeur de composant lorsqu'aucune attribution à des valeurs pré-mémorisées n'intervient.

23. Procédé selon l'une quelconque des revendications 11 à 22, l'emplacement de transmission ou de réflexion maximale et/ou optimale sur un composant (F0, F1, F2, F3) optique étant déterminé au moyen du capteur spectral et étant mémorisé avec une position locale.
